Europäisches Patentamt

European Patent Office

Office européen des brevets

(11) Veröffentlichungsnummer : **0 045 974**
**B1**

## (12) EUROPÄISCHE PATENTSCHRIFT

(45) Veröffentlichungstag der Patentschrift :
30.01.85

(51) Int. Cl.⁴ : **F 16 B 13/12, F 16 B 12/24**

(21) Anmeldenummer : **81106293.4**

(22) Anmeldetag : **12.08.81**

(54) **Nageldübel.**

(30) Priorität : **13.08.80 DE 3030643**

(43) Veröffentlichungstag der Anmeldung :
**17.02.82 Patentblatt 82/07**

(45) Bekanntmachung des Hinweises auf die Patenterteilung : **30.01.85 Patentblatt 85/05**

(84) Benannte Vertragsstaaten :
**AT BE CH FR GB IT LI LU NL SE**

(56) Entgegenhaltungen :
EP-A- 0 013 911
AT-B- 364 113
DE-A- 1 475 070
DE-A- 1 908 017
DE-A- 1 945 377
DE-A- 2 630 807
DE-A- 2 932 846
FR-A- 2 165 159
FR-A- 2 357 769
FR-A- 2 378 972
GB-A- 1 481 443
GB-A- 1 533 498
US-A- 2 650 516
US-A- 3 883 258

(73) Patentinhaber : **Tox-Dübel-Werk Richard W. Heckhausen KG**
**D-7762 Bodman-Ludwigshafen 1 (DE)**

(72) Erfinder : **Riedel, Josef**
**Hutbühlstrasse 6**
**D-7770 Überlingen 12 (DE)**

(74) Vertreter : **Wallach, Curt, Dipl.-Ing. Patentanwälte**
**Dipl.-Ing. C.Wallach et al**
**Dipl.-Ing. G. Koch Dr.T.Haibach Dipl.-Ing. R. Feldkamp**
**Kaufingerstrasse 8**
**D-8000 München 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 045 974 B1

## Beschreibung

Die Erfindung bezieht sich auf einen Nageldübel der im Oberbegriff des Anspruchs 1 angegebenen Gattung. Ein derart gestalteter Spreizdübel zur Verwendung von Holzschrauben als Spreizkörper ist durch die EP-A-13 911 bekannt. Bei diesem Spreizdübel werden die sägezahnartigen Vorsprünge von einander überlappenden Schuppen gebildet, die über Stege am Schraubeneinsatzloch miteinander in Verbindung stehen und bei axialer Verspannung durch Eindrehen der Holzschraube in den Dübelfuß keilförmig übereinandergeschoben werden, was zur Folge hat, daß der für die radiale Spreizkraft maßgebliche wirksame Querschnitt vergrößert wird. Dadurch, daß die Schuppen einzeln von dem jeweiligen Verbindungssteg vorstehen, wird eine individuelle Berührung mit der Bohrlochwandung auch bei unregelmäßig geformten Löchern oder Hohlsteinen gewährleistet, wobei verhältnismäßig große Durchmesser-Differenzen überbrückt werden können, weil außer der radialen von der Schraube ausgeübten Spreizkraft die durch axiale Verspannung hervorgerufene Keilwirkung die Schuppen zur Spreizung nach außen veranlaßt, vorausgesetzt daß die Holzschraube sich im Dübelfuß ein Muttergewinde eingegraben hat, welches die axiale Verspannung gewährleistet. Die sägezahnartigen Vorsprünge krallen sich bei der Spreizung in die Bohrlochwandung ein und erhöhen den Ausziehwiderstand.

Wenn keine axiale Verspannung erfolgen kann, beispielsweise beim Eintreiben eines Nagels, wird nur die Spreizwirkung infolge der Durchmesservergrößerung des Einsatzloches wirksam, und ein befriedigender Halt ist dann nur in Vollbaustoffen mit durchgehendem Dübelloch möglich. In Hohlblocksteinen ist der Ausziehwiderstand relativ gering.

Der Erfindung liegt daher die Aufgabe zugrunde, einen Nageldübel zu schaffen, der sowohl in Hohlbaustoffen als auch in Vollbaustoffen sowie in Verbindung mit Platten einsetzbar ist und eine zuverlässige Spreizwirkung mit hohem Ausziehwiderstand gewährleistet.

Gelöst wird die gestellte Aufgabe durch die im Kennzeichnungsteil des Anspruchs 1 angegebenen Merkmale.

Dadurch, daß der Dübelmantel mit (vorzugsweise als Widerhaken ausgebildeten) Vorsprüngen ausgestattet ist, wird in Hohlbausteinen oder hinter dem Dübellochende eine nach außen gerichtete radiale Aufspreizung erreicht, die bereits vorhanden ist bevor der Nagelkörper eingeführt wird, weil die Vorsprünge bzw. der mit diesen nach innen radial beim Einstecken zurückweichende Dübelkörper sich automatisch nach außen spreizen, sobald sie aus der Bohrlochwandung herausgetreten sind. Dadurch, daß die Vorsprünge in kurzen axialen Abständen aufeinanderfolgen, kann praktisch bei jeder Längenabmessung des Dübelloches ein festes federndes Abstützen in axialer Richtung erreicht werden, und diese Stützwirkung wird durch das Eintreiben des Nagelkörpers unterstützt, der nicht nur die Spreizsegmente gegen die Dübellochwandung drückt, sondern auch die im freien angeordneten Vorsprünge nach außen spreizt, so daß der Dübel bei eingesetztem Nagelkörper selbst mit Gewalt nicht mehr entfernt werden kann. Wird nämlich ein derartiger Dübel durch ein Bohrloch eines Hohlbaustoffes gesteckt, so werden, die weit über den Umfang des Dübelkörpers vorstehenden federnden Segmente zunächst nach innen gedrückt, d. h. der Dübelkörper wird kleiner, und die Aufnahmebohrung für den Nagelkörper, d. h. das Nagelführungsloch verkleinert sich ebenfalls um den Betrag der Vorsprünge. Sobald die Vorsprünge mit ihren freien Enden aus dem Loch hervortreten, federn diese wieder nach außen zurück und hintergreifen die Bohrung. Wird nun ein Nagel in das Nagelführungsloch eingeschlagen, vergrößert sich die Hintergreifung noch und die Vorsprünge können nicht mehr zurück. Durch die Versetzung wird erreicht, daß die Stegdicke (Platten) im Bereich der Dübellänge keine Rolle spielt, da immer eine genügende Anzahl von Vorsprüngen in Eingriff stehen.

Der erfindungsgemäße Dübel ist jedoch auch in Vollbaustoffen anwendbar, wobei er über die gesamte Länge mit seinem Dübelmantel gegen die Bohrlochwandung gespreizt wird.

Der Dübel wird vorzugsweise aus Kunststoff gespritzt.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen

Figur 1 eine Seitenansicht eines erfindungsgemäß ausgebildeten Nageldübels mit schuppenförmigen Vorsprüngen

Figur 2 eine Ansicht des Dübels gemäß Figur 1 in Richtung des Pfeiles II gemäß Figur 1 betrachtet

Figur 3 eine um 90° gegenüber Figur 1 gedrehte Seitenansicht des Dübels

Figur 4 den in Figur 1 bis 3 dargestellten Dübel, eingesetzt in ein Dübelloch einer Platte mit dahinter befindlichem Hohlraum, und

Figur 5 einen in ein Bohrloch einer Massivwand eingesetzten Nageldübel.

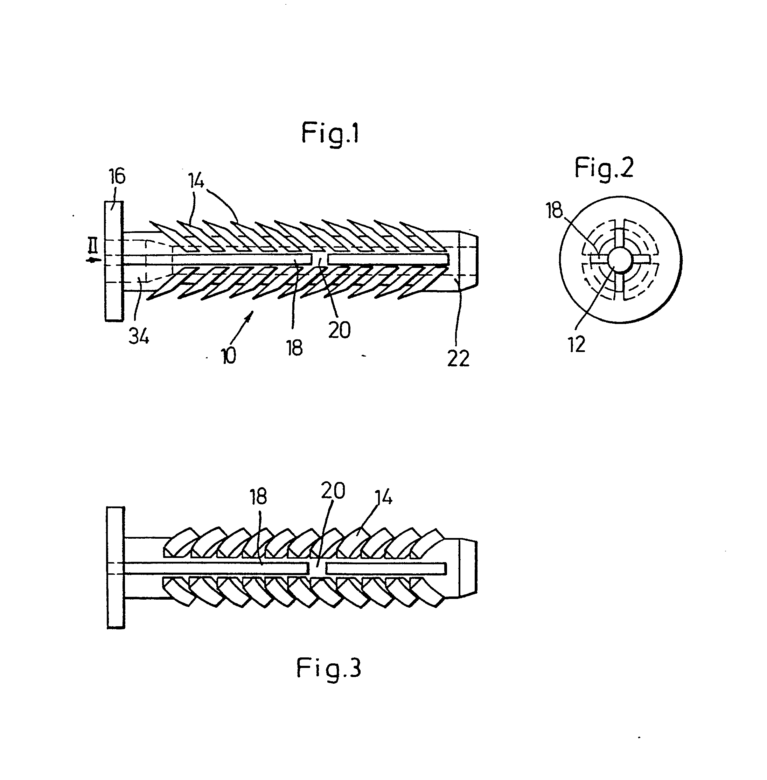

Der Dübelkörper 10 weist ein zentrales Nagelführungsloch 12 auf. Sein Außendurchmesser bestimmt den Bohrlochdurchmesser des Dübelloches und er trägt über diesen Durchmesser nach außen vorstehende Vorsprünge 14, die gemäß dem Ausführungsbeispiel nach Figur 1 bis 3 als widerhakenartige Schuppen 14 ausgebildet sind, die nach dem mit einem Flansch 16 versehenen Dübelkopf weisen und nach innen federn, wobei dieser Federvorgang durch das Nagelführungsloch und Längsschlitze 18 unterstützt wird, die im Mittelabschnitt durch Stege 20 unterbrochen sind und in einem geschlossenen Dübelfuß 22 münden.

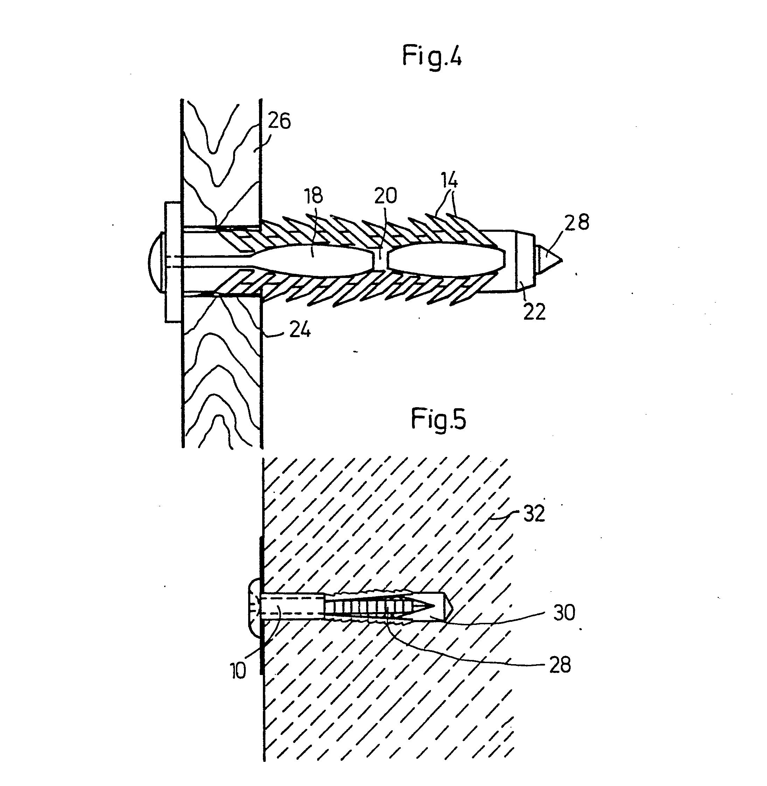

Ein solcher Dübel kann in ein Bohrloch, beispielsweise gemäß Fig. 4 in das Bohrloch 24 einer Platte von links her eingeschoben werden, wobei die schuppenartigen Vorsprünge nach innen zurückweichen. Da kein Spreizelement im Dübelkörper angeordnet ist, können sich die durch die Schlitzung gebildeten Dübelsegmente mit den nach außen von ihnen getragenen Vorsprüngen in radialer Richtung nach innen zusammenquetschen, so daß einleichtes Einführen gewährleistet ist.

Sobald die Vorsprünge das Loch verlassen, spreizen sie federnd nach außen und stützen sich an der Hinterseite der Platte 26 in jeder Einschubstellung ab. Im allgemeinen wird es zweckmäßig sein, den Dübel vollständig, wie aus Figur 4 ersichtlich, durch das Loch zu schieben. Jedoch besteht hierzu keine zwingende Notwendigkeit, wenn der Dübelkopf aus irgendeinem Grunde mehr oder weniger weit von der Platte vorstehen soll. Durch Einschlagen eines Nagelkörpers 28 in das Nagelführungsloch 12 erfolgt eine weitere Spreizung der Dübelsegmente nach außen, da der Nageldurchmesser größer gewählt ist als der Durchmesser des Nagelführungsloches, so daß bei eingesetztem Nagel ein Zurückschieben verhindert und ein sicherer Halt gewährleistet ist.

Die Verankerung wird auch noch dadurch verstärkt, daß die Längsschlitze 18 des Dübelkörpers 10 in bestimmten Abständen durch Stege 20 unterbrochen sind, durch die die Segmente umfangsmäßig fest miteinander verbunden bleiben. Hierduch entstehen beim Einschlagen des Nagels Zonen im geschlitzten Bereich, die sich sehr stark ausdehnen und dadurch die Spreizkraft auf die Hintergreifung besser übertragen als wenn der Dübelkörper durchgehend geschlitzt wäre.

Figur 5 zeigt einen Dubelkörper 10 eingesetzt in das Bohrloch 30 einer massiven Wand 32. Hierbei wird der Dübel beim Einschlagen des Nagels 28 wie die bekannten Nageldübel mit verstärkter Spreizung durch die verdrängten Federelemente nach außen ausgebreitet.

Als Nagelkörper 28 kann ein metallischer Nagel oder ein Kunststoffnagel benutzt werden, da dieser lediglich die Spreizfunktion zu übernehmen hat und keiner wesentlicheri Zugbelastung ausgesetzt wird. Im Hinblick auf ein erforderliches **Lösen der Verbindung könnte jedoch auch eine** Nagelschraube benutzt werden.

Das dargestellte Ausführungsbeispiel zeigt Vorsprünge in Gestalt von widerhakenartig ausgebildeten Schuppen, die untereinander axial versetzt sind, jedoch können diese Vorsprünge auch andere Form haben, obgleich eine federnde Ausladung schräg in axialer Richtung vom Dübelkörper abstehender Elemente zu bevorzugen ist. Um eine Spreizung im Dübelkopf zu vermeiden, kann das Nagelführungsloch im Kopfteil zweckmäßigerweise mit einer Erweiterung 34 versehen sein.

Die Kopfform der verwendeten Nägel kann der Form des Dübelkopfes derart angepaßt sein, daß die Köpfe ganz oder teilweise im Dübelkopf oder Dübelflansch verschwinden. Die Nägel selbst können über ihre gesamte Länge oder über einen Teil ihrer Länge mit axialen und/oder in Umfangsrichtung verlaufenden Rillen bzw. Rippen versehen sein, die als Führung bzw. Rutschsicherung dienen.

## Ansprüche

1. Nageldübel, bestehend aus einem im Außendurchmesser dem Dübelbohrloch angepaßten Dübelkörper (10) mit zentralem Nagelführungsloch (12), mit den Dübelkörper in Segmente aufteilenden Längsschlitzen (18) und mit vom Dübelkörper nach außen vorstehenden, axial versetzt angeordneten Vorsprüngen (14), dadurch gekennzeichnet, daß die Vorsprünge (14) radial nach innen gelenkigfedernd derart ausgebildet sind, daß sie nach dem radialen Zusammendrücken beim Einsatz in das Bohrloch **eine radial nach außen gerichtete Spreizvorspannkraft aus üben, die durch einen einschlagbaren Nagelkörper (28) verstärkbar ist.**

2. Nageldübel nach Anspruch 1, dadurch gekennzeichnet, daß der Dübelkopf und der Dübelfuß (22) einen geschlossenen Hülsenkörper aufweisen.

3. Nageldübel nach Anspruch 1, dadurch gekennzeichnet, daß die Vorsprünge (14) schräg zur Dübelachse entgegen der Ausziehrichtung verlaufend angeordnet sind.

4. Nageldübel nach Anspruch 3, dadurch gekennzeichnet, daß die Vorsprünge (14) in Gestalt von übereinandergefügten Schuppen, Widerhaken oder Zungen ausgebildet sind.

5. Nageldübel nach einem der Ansprüche 1 bis 4, dadurch gekennzeichnet, daß der Dübelkörper (10) am Dübelkopf einen Flansch (16) aufweist.

6. Nageldübel nach Anspruch 1, dadurch gekennzeichnet, daß der Durchmesser des aus Kuntstoff oder Metall bestehenden Nagelkörpers (28) größer ist als der Durchmesser des Nagelführungsloches (12).

7. Nageldübel nach Anspruch 6, dadurch gekennzeichnet, daß die Nägel in ihrer Kopfform dem Dübelkopf angepaßt sind, und/oder im eingesteckten Zustand in diesem aufgenommen sind.

8. Nageldübel nach Anspruch 6, dadurch gekennzeichnet, daß die Oberfläche des Nagelschaftes mit in Umfangsrichtung verlaufenden Rillen oder Rippen als Rutschsicherung versehen ist.

9. Nageldübel nach Anspruch 6, dadurch gekennzeichnet, daß der Schaft der Nägel mit axial verlaufenden Rippen oder Rillen versehen ist.

10. Nageldübel nach einem der Ansprüche 1 bis 9, dadurch gekennzeichnet, daß das Nagelführungsloch (12) im Dübelkopf eine Erweiterung (34) aufweist.

## Claims

1. A nail dowel comprising a dowel body (10) having an outer diameter matched to the bore for the dowel, the dowel body having a central nail guiding hole (12), longitudinal slots (18) which subdivide the dowel body into segments, and axially displaced projections (14) which project outwardly from the dowel body, characterised in that the projections (14) are constructed to be resiliently and radially inwardly pivotable in such a way that after radial compression during insertion into the bore they exert a radially outwardly directed spreading bias force which can be reinforced by a nail body (28) which can be driven in.

2. A nail dowel in accordance with claim 1, characterised in that the dowel head and the dowel tip (22) have a closed sleeve-like body.

3. A nail dowel in accordance with claim 1, characterised in that the projections (14) are arranged so that they extend obliquely to the dowel axis against the direction of withdrawal.

4. A nail dowel in accordance with claim 3, characterised in that the projections (14) are constructed in the form of scales, barbs or tongues which overlap one another.

5. A nail dowel in accordance with one of the claims 1 to 4, characterised in that the dowel body (10) has a flange (16) at the dowel head.

6. A nail dowel in accordance with claim 1, characterised in that the diameter of the nail body (28) consisting of plastic or metal is larger than the diameter of the nail guiding hole (12).

7. A nail dowel in accordance with claim 6, characterised in that the head shape of the nails is matched to the dowel head and/or received in the dowel head in the inserted state.

8. A nail dowel in accordance with claim 6, characterised in that the surface of the nail shaft is provided with grooves or ribs which extend in **the peripheral direction to prevent sliding.**

9. A nail dowel in accordance with claim 6, characterised in that the shaft of the nail is provided with axially extending ribs or grooves.

10. A nail dowel in accordance with one of the claims 1 to 9, characterised in that the nail-guiding hole (12) has an enlarged portion (34) in the dowel head.

## Revendications

1. Cheville barbue se composant d'un corps de cheville (10) dont le diamètre externe est adapté au trou de forage de la cheville et qui présente un trou de guidage central (12) pour l'élément de fixation ou de clouage, des fentes longitudinales (18) qui divisent le corps de la cheville en segments et des saillies (14) faisant saillie du corps de la cheville vers l'extérieur et prévues décalées dans le sens axial, la cheville étant caractérisée en ce que les saillies (14) sont prévues sous une forme telle qu'elles fassent ressort radialement vers l'intérieur par un effet d'articulation, de telle manière qu'après la compression radiale lors de l'introduction dans le trou de forage, elles exercent un effort de tension préalable d'expansion dirigé radialement vers l'extérieur, qui peut être renforcé par un élément de fixation ou de clouage (28) pouvant être enfoncé.

2. Cheville barbue suivant la revendication 1, caractérisé en ce que la tête de la cheville et la queue (22) de la cheville forment un élément de douille fermé.

3. Cheville barbue suivant la revendication 1, caractérisé en ce que les saillies (14) sont prévues en oblique par rapport à l'axe de la cheville, dans le sens opposé au sens d'arrachement ou d'extraction.

4. Cheville barbue suivant la revendication 3, caractérisé en ce que les saillies (14) sont prévues sous la forme d'écailles, de contre-crochets ou de languettes qui se chevauchent.

5. Cheville barbue suivant l'une quelconque des revendications 1 à 4, caractérisé en ce que le corps (10) de la cheville est muni, à la tête, d'un collet (16).

6. Cheville barbue suivant la revendication 1, caractérisé en ce que le diamètre de l'élément de fixation ou de clouage (28), en matière plastique ou en métal, est supérieur au diamètre du trou de guidage (12) réservé à cet élément.

7. Cheville barbue suivant la revendication 6, caractérisé en ce que les éléments de fixation ou de clouage sont par la forme de leur tête, adaptés à la tête de la cheville et/ou sont, à l'état enfoncé, contenus dans la tête de la cheville.

8. Cheville barbue suivant la revendication 6, caractérisé en ce que la surface de la tige des éléments de fixation ou de clouage présente, comme sécurité contre le glissement, des rainures ou des nervures suivant son sens périphérique.

9. Cheville barbue suivant la revendication 6, caractérisé en ce que la tige des éléments de fixation ou de clouage présente des nervures ou des rainures d'allure axiale.

10. Cheville barbue suivant l'une quelconque des revendications 1 à 9, caractérisé en ce que le trou de guidage (12) réservé à l'élément de fixation ou de clouage présente un élargissement (34) dans la tête de la cheville.

# Fig.1

# Fig.2

# Fig.3

Fig.4

Fig.5